# EUROPEAN PATENT APPLICATION

(11) **EP 4 676 021 A1**
(43) Date of publication of application: **07.01.2026**
(21) Application number: 24785041.5
(22) Date of filing: 29.02.2024
(51) Int. Cl.: H04N 7/14, H04N 7/15, H04L 12/18, G06F 3/00, G06F 3/14

(54) **ELECTRONIC DEVICE FOR PERFORMING FUNCTION OF REMOTELY ACCESSING OTHER ELECTRONIC DEVICE, AND CONTROL METHOD THEREFOR**

(30) Priority: 05.04.2023 KR 20230044719
(71) Applicant: Samsung Electronics Co., Ltd., Suwon-si, Gyeonggi-do 16677 (KR)
(72) Inventor: LEE, Jongin, Suwon-si Gyeonggi-do 16677 (KR); KIM, Minjoo, Suwon-si Gyeonggi-do 16677 (KR); KIM, Sehyun, Suwon-si Gyeonggi-do 16677 (KR); BAE, Geumrae, Suwon-si Gyeonggi-do 16677 (KR)
(74) Representative: Walaski, Jan Filip
(86) International application number: PCT/KR2024/002674
(87) International publication number: WO 2024/210331

(57) **Abstract**

An electronic device performing a remote access function to other electronic devices and a controlling method thereof are provided. The electronic device according to an embodiment includes a communication interface, a camera, a display, and one or more processors configured to, in response to a video call application being executed in a first external electronic device remotely connected through the communication interface, receive a request for providing connection information of the camera to capture an image related to the video call application from the first external electronic device, transmit the connection information of the camera obtained in response to the request to the first external electronic device, and based on communication being established with a server device providing a video call service of the video call application based on the connection information of the camera transmitted to the first external electronic device, transmit an image captured through the camera to the server device through the communication interface.

## Description

### [Technical Field]

The present disclosure relates to an electronic device that performs a video call application installed in another electronic device by remote accessing the another electronic device and a controlling method thereof.

### [Background Art]

With the growth of the service industry and increasing social awareness regarding the improvement of working environments, more companies have adopted remote work policies. This trend has accelerated further in response to the recent COVID-19 pandemic, as many companies implemented remote work to prevent the spread of the virus.

In most companies that support remote work, employees are prohibited from taking electronic devices used within the company (e.g., desktop computers or laptops provided by the company for work purposes) outside the company premises in order to prevent the leakage of confidential information. As a result, employees typically access the electronic devices located within the company via remote access when working from home. Specifically, employees use their home electronic devices to remotely access the in-office devices, which are managed under the company's security system, and perform work using software and data installed in those in-office devices.

However, when performing tasks through remote access, workers experience difficulties in transmitting and receiving data. For example, when workers collaborate by conducting a video call with another worker, the video information of the another worker (i.e., the video call counterpart), which has a large data size, is relayed through the worker's in-office electronic device and transmitted to the electronic device in the worker's remote work environment and thus, problems such as the counterpart's screen freezing or delays in screen reception may occur on the worker's device used for remote work.

### [Disclosure of Invention]

### [Solution to Problem]

An electronic device according to an embodiment includes a communication interface, a camera, a display, and one or more processors. The one or more processors may be configured to, in response to a video call application being executed in a first external electronic device remotely connected through the communication interface, receive a request for providing connection information of the camera to capture an image related to the video call application from the first external electronic device, transmit the connection information of the camera obtained in response to the request to the first external electronic device, and based on communication being established with a server device providing a video call service of the video call application based on the connection information of the camera transmitted to the first external electronic device, transmit an image captured through the camera to the server device through the communication interface.

The one or more processors may be configured to receive a screen of the first external electronic device from the first external electronic device by remotely accessing the first external electronic device and display the screen through the display, and the received screen of the first external electronic device includes a video call image obtained through the video call application installed in the first external electronic device.

The one or more processors may be configured to compare a first network connection speed between the electronic device and the server device and a second network connection speed between the electronic device and the server device through the first external electronic device, and based on the second network connection speed being less than the first network connection speed, receive a video call image from a server device performing the video call service by executing a video call application installed in the electronic device.

The one or more processors may be configured to, based on the second network connection speed being less than the first network connection speed, receive session information of a video call between the first external electronic device and the second external electronic device from the first external electronic device through the communication interface, and receive a video call image from a server device providing the video call service by executing a video call application installed in the electronic device based on the received session information.

The one or more processors may be configured to, based on the session information being received from the first external electronic device, transmit a termination request for the video call application that is being executed in the first external electronic device to the first external electronic device through the communication interface.

The one or more processors may be configured to, based on information about a third network connection speed between the first external electronic device and the server device being received from the first external electronic device, identify the second network connection speed based on a fourth network connection speed between the electronic device and the first external electronic device and the third network connection speed.

The one or more processors may be configured to, based on the video call application installed in the electronic device being executed, display a screen in which an execution screen of the video call application is included in one area and a remote access screen for the first external electronic device is included in a remaining area through the display.

The one or more processors may be configured to, based on identifying that the first external electronic device is unable to encode and transmit the video call image, receive a video call image from a server device providing the video call service by executing a video call application installed in the electronic device.

The one or more processors may be configured to, based on identifying that the video call application is not installed in the electronic device, display a UI guiding installation of the video call application through the display.

A controlling method of an electronic device according to an embodiment includes, in response to a video call application being executed in a first external electronic device by remotely accessing the first external electronic device, obtaining connection information of a camera of the electronic device for capturing an image related to the video call application from the first external electronic device. The method includes transmitting the obtained connection information of the camera to the first external electronic device. The method includes, based on communication being established with a server device providing a video call service of the video call application based on the connection information of the camera, transmitting an image captured through the camera to a server device through the communication interface.

The method may further include receiving a screen of the first external electronic device from the first external electronic device by remotely accessing the first external electronic device and displaying the screen through the display, and the received screen of the first external electronic device may include a video call image obtained through the video call application installed in the first external electronic device.

The method may further include comparing a first network connection speed between the electronic device and the server device and a second network connection speed between the electronic device and the server device through the first external electronic device, and based on the second network connection speed being less than the first network connection speed, receiving a video call image from a server device performing the video call service by executing a video call application installed in the electronic device.

The receiving may include, based on the second network connection speed being less than the first network connection speed, receiving session information of a video call between the first external electronic device and the second external electronic device from the first external electronic device through the communication interface, and receiving a video call image from a server device providing the video call service by executing a video call application installed in the electronic device based on the received session information.

The method may further include, based on the session information being received from the first external electronic device, transmitting a termination request for the video call application that is being executed in the first external electronic device to the first external electronic device through the communication interface.

The comparing may further include, based on information about a third network connection speed between the first external electronic device and the server device being received from the first external electronic device, identifying the second network connection speed based on a fourth network connection speed between the electronic device and the first external electronic device and the third network connection speed.

The method may further include, based on the video call application installed in the electronic device being executed, displaying a screen in which an execution screen of the video call application is included in one area and a remote access screen for the first external electronic device is included in a remaining area through the display.

The method may further include, based on identifying that the first external electronic device is unable to encode and transmit the video call image, receiving a video call image from a server device providing the video call service by executing a video call application installed in the electronic device.

The method may further include, based on identifying that the video call application is not installed in the electronic device, display a UI guiding installation of the video call application through the display.

According to an embodiment, in a non-transitory computer-readable recording medium storing a computer instruction that, when executed by a processor of an electronic device, causes the electronic device to perform operations, the operations include, in response to a video call application installed in the first external electronic device being executed by remotely accessing the first external electronic device, obtaining connection information of a camera of the electronic device for capturing an image related to the video call application from the first external electronic device. The method includes transmitting the obtained connection information of the camera to the first external electronic device. The method includes, based on communication being established with a server device providing a video call service of the video call application based on the connection information of the camera, transmitting an image captured through the camera to a server device through the communication interface.

### [Brief Description of Drawings]

FIG. 1 is an exemplary view of an electronic device that performs remote access to an external electronic device:
FIG. 2 is a schematic block diagram of an electronic device according to an embodiment;
FIG. 3 is an exemplary view illustrating that an electronic device transmits captured image information obtained through a camera to a server device providing a video call service according to an embodiment;
FIG. 4 is an exemplary view illustrating that an electronic device receives execution screen information of a video call application from an external electronic device according to an embodiment;
FIG. 5 is an exemplary view illustrating that a connection state between an electronic device and a server device related to a video call is changed, and a captured image of a counterpart of a video call is directly received from a server device;
FIG. 6 is a view illustrating that an electronic device displays a video call execution screen based on session information according to an embodiment;
FIG. 7 is a sequence view illustrating a method of generating connection information of a camera of an electronic device according to an embodiment;
FIG. 8 is a sequence view illustrating a method of changing a connection state between an electronic device and a server device related to a video call according to an embodiment;
FIG. 9 is a detailed configuration view of an electronic device according to an embodiment; and
FIGS. 10 to 12 are flowcharts illustrating a method of controlling an electronic device according to an embodiment.

### [Mode for Invention]

The terms used in the present disclosure will be briefly described before the present disclosure is described in detail.

General terms that are currently widely used are selected as the terms used in the embodiments of the disclosure in consideration of their functions in the disclosure, but may be changed based on the intention of those skilled in the art or a judicial precedent, the emergence of a new technique, or the like. In addition, in a specific case, terms arbitrarily chosen by an applicant may exist, in which case, the meanings of such terms will be described in detail in the corresponding descriptions of the disclosure. Thus, the terms used in the embodiments of the disclosure need to be defined on the basis of the meanings of the terms and the overall contents throughout the disclosure rather than simple names of the terms.

In the disclosure, the expressions "have", "may have", "include" or "may include" used herein indicate existence of corresponding features (e.g., elements such as numeric values, functions, operations, or components), but do not exclude presence of additional features.

In the disclosure, the expressions "A or B", "at least one of A or/and B", or "one or more of A or/and B", and the like may include any and all combinations of one or more of the items listed together. For example, the term "A or B", "at least one of A and B", or "at least one of A or B" may refer to all of the case (1) where at least one A is included, the case (2) where at least one B is included, or the case (3) where both of at least one A and at least one B are included.

Expressions "first", "second", "1st," "2nd," or the like, used in the disclosure may indicate various components regardless of sequence and/or importance of the components, will be used only in order to distinguish one component from the other components, and do not limit the corresponding components.

When it is described that an element (e.g., a first element) is referred to as being "(operatively or communicatively) coupled with/to" or "connected to" another element (e.g., a second element), it should be understood that it may be directly coupled with/to or connected to the other element, or they may be coupled with/to or connected to each other through an intervening element (e.g., a third element).

An expression "~configured (or set) to" used in the disclosure may be replaced by an expression, for example, "suitable for," "having the capacity to," "~designed to," "~adapted to," "~made to," or "~capable of" depending on a situation. A term "~configured (or set) to" may not necessarily mean "specifically designed to" in hardware.

In some cases, an expression "~an apparatus configured to" may mean that an apparatus "is capable of" together with other apparatuses or components. For example, a "processor configured (or set) to perform A, B, and C" may mean a dedicated processor (e.g., an embedded processor) for performing the corresponding operations or a generic-purpose processor (e.g., a central processing unit (CPU) or an application processor) that may perform the corresponding operations by executing one or more software programs stored in a memory device.

Singular expressions include plural expressions unless the context clearly dictates otherwise. In this specification, terms such as "comprise" or "have" are intended to designate the presence of features, numbers, steps, operations, components, parts, or a combination thereof described in the specification, but are not intended to exclude in advance the possibility of the presence or addition of one or more of other features, numbers, steps, operations, components, parts, or a combination thereof.

In exemplary embodiments, a 'module' or a '~er' may perform at least one function or operation, and be implemented as hardware or software or be implemented as a combination of hardware and software. In addition, a plurality of 'modules' or a plurality of '~er' may be integrated into at least one module and be implemented as at least one processor (not shown) except for a 'module' or a '~er' that needs to be implemented as specific hardware.

Meanwhile, various elements and regions in the drawings are schematically drawn in the drawings. Therefore, the technical concept of the disclosure is not limited by a relative size or spacing drawn in the accompanying drawings.

Hereinafter, an embodiment of the present disclosure will be described in greater detail with reference to the accompanying drawings.

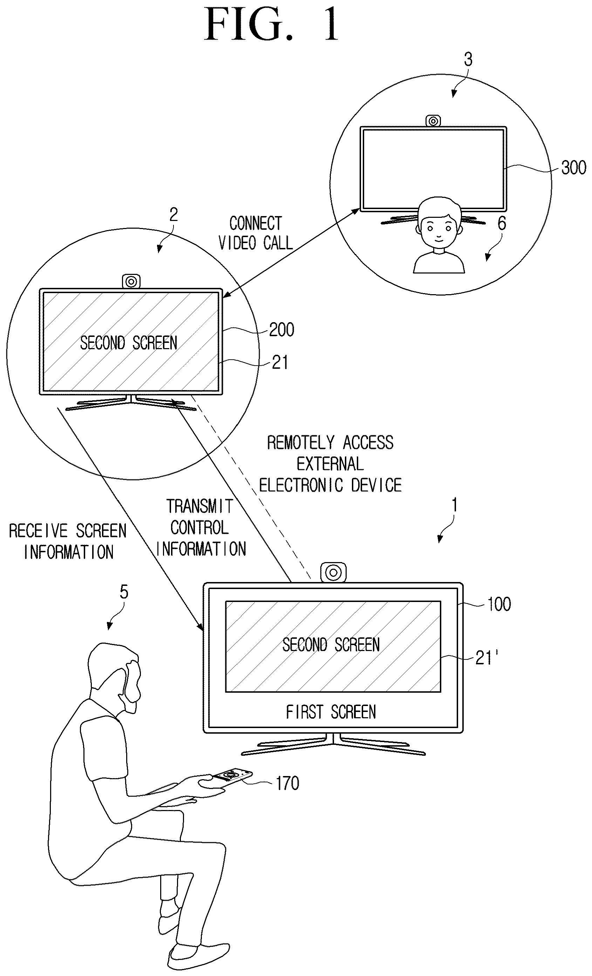

FIG. 1 is an exemplary view of an electronic device 100 that performs remote access to an external electronic device 200.

Referring to FIG. 1, the electronic device 100 according to an embodiment performs a remote access function for the external electronic device 200. Here, the electronic device 100 performing the remote access function may mean that the electronic device 100 accesses another electronic device 200 after a network connection with the other electronic device 200 and shares control authority for the other electronic device 200 to remotely control the another electronic device 200. Hereinafter, the another electronic device 200 will be referred to as the external electronic device 200.

At this time, the electronic device 100 may involve an identification process of the external electronic device 200 to be remotely accessed, and an authentication process for remote access to the identified external electronic device 200. For example, the electronic device 100 may identify the external electronic device 200 based on identification information of the external electronic device 200 (e.g., a network IP address of the external electronic device 200, etc.) and transmit a preset ID and password to the identified external electronic device 200. At this time, the electronic device 100 and the external electronic device 200 may be connected via a network through an authentication process of the external electronic device 200 for the ID and password transmitted by the electronic device 100 (i.e., a process of identifying whether the preset ID and password match the ID and password received from the electronic device 100).

Meanwhile, referring to FIG. 1, the electronic device 100 may transmit control information for the external electronic device 200 to the remotely connected external electronic device 200. Through this, a user 5 may remotely control the external electronic device 200 using the electronic device 100 even in a space separated from the external electronic device 200. For example, the user 5 may remotely execute or control an operating system (OS), a program (or an application), etc. installed in the external electronic device by transmitting a user command to the external electronic device 200 through the electronic device 100. Specifically, the user may input a user command to the control device 100 through an input interface (e.g., a keyboard, a mouse, etc.) of the electronic device 100.

In particular, referring to FIG. 1, a user may input a user command to the electronic device 100 by operating or controlling a remote control device 170 (e.g., a remote controller, a pad, a smart phone connected to the electronic device, etc.) of the electronic device 100. At this time, the electronic device 100 may remotely control the external electronic device 200 through the electronic device 100 by transmitting the input user command to the external electronic device 200. In addition, the electronic device 100 may receive screen information of the external electronic device 200 from the remotely connected external electronic device 200. Here, the screen information of the external electronic device 200 may be screen information output by the external electronic device 200. The electronic device 100 may share a screen output from the external electronic device 200 based on the screen information received from the external electronic device 200.

For example, based on the screen information received from the external electronic device 200, the electronic device 100 may display the same screen as the screen displayed on the display of the external electronic device 200 (or a screen that is a duplicate of the screen displayed on the display of the external electronic device 200) on the display of the electronic device 100.

Meanwhile, the screen information may include audio information output from the external electronic device 200.

Referring back to FIG. 1, the user 5 may execute a program installed in the external electronic device 200 via remote access to perform communication with another external electronic device 300 (e.g., a server device, etc.) that is linked with the external electronic device 200. For example, the user 5 may execute a program installed in the external electronic device 200 via the remote control device 170 (e.g., a remote controller, etc.) of the electronic device 100, and may perform communication with another external electronic device 200 via the executed program.

For example, the user 5 may execute a video call application installed in the external electronic device 200 via remote access. In this case, the external electronic device 200 may receive captured image information of a counterpart 6 from another external electronic device 300 connected via an video call application, and display the captured image of the counterpart 6 on the display of the external electronic device 200 based on the received captured image information.

At this time, the electronic device 100 remotely connected to the external electronic device 200 may receive screen information from the external electronic device 200, and based on the received screen information, may display the same screen as the screen displayed on the display of the external electronic device 200 (i.e., the execution screen of the video call application displaying the captured image of the counterpart) on the display of the electronic device 100.

However, when a video call application of the external electronic device 200 is executed via remote access, the counterpart 6 of the video call (i.e., the other party of another external electronic device 200) cannot receive the captured image information of the user 5 from the external electronic device 200. This is because the user 5 who has remotely accessed the external electronic device 200 via the electronic device 100 is not in a space 2 where the external electronic device 200 executing the video call application is located. In other words, since the user 5 is in a space 1 where the electronic device 100 is located, which is separate from the external electronic device 200, even if the captured image is obtained using the camera of the external electronic device 200 as the video call application is executed, the user 5 is not included in the captured image, and the counterpart of the video call cannot help but receive the captured image of the external electronic device 200 that does not include the user 5. Therefore, when executing a video call application of the external electronic device 200 via remote access, there is a problem in that the purpose of executing the video call application is not fully achieved.

According to an embodiment of the present disclosure for solving the above-described problem, when executing a video call application of the external electronic device 200 through remote control, an electronic device 100 enables a smooth video call with the counterpart of the video call through a camera of the electronic device 100 rather than the external electronic device 200. Hereinafter, an embodiment of the present disclosure related thereto will be described in detail.

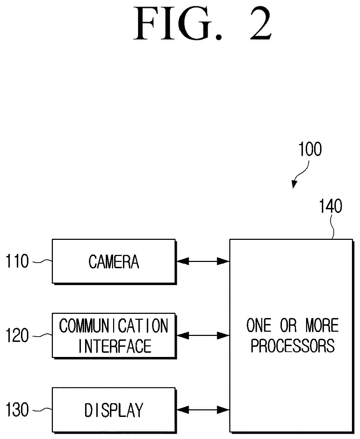

FIG. 2 is a schematic block diagram of the electronic device 100 according to an embodiment.

Referring to FIG. 2, the electronic device 100 includes a camera 110, a communication interface 120, a display 130, and one or more processors. The electronic device 100 may include various devices including the camera 110, the communication interface 120, and the display 130. For example, the electronic device 100 may be a TV, a desktop PC, a laptop, a smartphone, a tablet PC, a server, etc. Meanwhile, the above-described examples are merely examples for explaining the electronic device 100, and the electronic device 100 is not limited thereto.

The camera 110 captures an object (or subject) around the electronic device 100 included in a photographing area to obtain an image of the object. Meanwhile, the image obtained by the camera 110 may be a plurality of images constituting a moving image. For example, the electronic device 100 may capture a user around the electronic device 100 using the camera 110 to obtain a plurality of images of the user, thereby obtaining a captured image of the user. To this end, the camera 110 may be implemented as an image sensor such as a CMOS image sensor (CIS) having a CMOS structure or a charge coupled device (CCD) having a CCD structure.

However, the camera 110 is not limited thereto, and the camera 110 may be implemented as a camera 110 module of various resolutions capable of capturing an object (or subject). Meanwhile, the camera 110 may be implemented as a depth camera (e.g., an IR depth camera, etc.), a stereo camera, or an RGB camera, etc.

The communication interface 120 may perform communication with an external device and an external server through various communication methods. For example, the electronic device 100 may perform a network connection with the external electronic device 200 through the communication interface 120 and then remotely access the external electronic device 200. In this case, the communication interface 120 may perform remote access to the external electronic device 200 based on Remote Desktop Protocol (RDP), Virtual Network Computing (VNC) protocol, SSH protocol, etc.

Meanwhile, the communication interface 120 being communicatively connected with an external device and an external server may include performing communication via a third device (e.g., repeater, hub, access point, gateway, etc.). For example, the external device may be implemented as another external electronic device 200, a server, a cloud storage, a network, etc.

In addition, the communication interface 120 may include various communication modules to perform communication with an external device. For example, the communication interface 120 may include a wireless communication module, and may include a cellular communication module using at least one of, for example, 3^{rd} Generation (3G), 3^{rd} Generation Partnership Project (3GPP), Long Term Evolution (LTE), LTE Advance (LTE-A), code division multiple access (CDMA), wideband CDMA (WCDMA), universal mobile telecommunications system (UMTS), Wireless Broadband (WiBro), or Global System for Mobile Communications (GSM). As another example, the wireless communication module may include at least one of, for example, wireless fidelity (Wi-Fi), Bluetooth, Bluetooth low energy (BLE), or Zigbee.

The display 130 may display various visual information. For example, the processor may display the screen of an external electronic device 200 that is remotely connected through the display 130.

The display 130 may be implemented as various forms of displays 130 such as a Liquid Crystal Display (LCD), an Organic Light Emitting Diodes (OLED) display 130, a Quantum dot light-emitting diodes (QLED) display 130, a Plasma Display Panel (PDP), etc. The display 130 may also include a driving circuit, a backlight unit, etc., which may be implemented as a TFT, a low temperature poly silicon (LTPS) TFT, an organic TFT (OTFT), etc. Meanwhile, the display 130 may be implemented as a flexible display, a 3D display, etc.

Meanwhile, the display 130 may be implemented as a touch screen together with a touch panel. In this case, the display 130 may function as an output unit that outputs information between the electronic device 100 and the user, and at the same time, may function as an input unit that provides an input interface between the electronic device 100 and the user.

One or more processors 140 are electrically connected to the camera 110, the communication interface 120, and the display 130 to control the overall operations and functions of the electronic device 100.

The one or more processors 140 may include one or more of a central processing unit (CPU), a graphics processing unit (GPU), an accelerated processing unit (APU), a many integrated core (MIC), a digital signal processor (DSP), a neural processing unit (NPU), a hardware accelerator, or a machine learning accelerator. The one or more processors 140 may control one or any combination of the other components of the electronic device 100, and may perform communication-related operations or data processing. The one or more processors 140 may execute at least one program or instruction stored in the memory (not shown). For example, the one or more processors 140 may perform a method according to an embodiment by executing at least one instruction stored in the memory.

When a method according to an embodiment includes a plurality of operations, the plurality of operations may be performed by one processor or by a plurality of processors. For example, when a first operation, a second operation, and a third operation are performed by the method according to an embodiment, all of the first operation, the second operation, and the third operation may be performed by the first processor, or the first operation and the second operation may be performed by the first processor (e.g., a general-purpose processor) and the third operation may be performed by the second processor (e.g., an artificial intelligence-dedicated processor).

The one or more processors 140 may be implemented as a single core processor including a single core or as one or more multicore processors including a plurality of cores (e.g., homogeneous multicore or heterogeneous multicore). When the one or more processors 140 are implemented as a multicore processor, each of the plurality of cores included in the multicore processor may include internal memory of the processor 140 such as cache memory and an on-chip memory, and a common cache shared by the plurality of cores may be included in the multicore processor. Each of the plurality of cores (or some of the plurality of cores) included in the multicore processor may independently read and perform program instructions to implement the method according to an embodiment, or all (or some) of the plurality of cores may be coupled to read and perform program instructions to implement the method according to an embodiment.

When a method according to an embodiment includes a plurality of operations, the plurality of operations may be performed by one core of a plurality of cores included in a multi-core processor, or may be performed by a plurality of cores. For example, when a first operation, a second operation, and a third operation are performed by a method according to an embodiment, all of the first operation, the second operation, and the third operation may be performed by the first core included in the multi-core processor, or the first operation and the second operation may be performed by the first core included in the multi-core processor and the third operation may be performed by the second core included in the multi-core processor.

In the embodiments of the present disclosure, the processor may mean a system-on-chip (SoC) in which one or more processors and other electronic components are integrated, a single-core processor, a multi-core processor, or a core included in a single-core processor or multi-core processor and here, the core may be implemented as CPU, GPU, APU, MIC, DSP, NPU, hardware accelerator, or machine learning accelerator, etc., but the core is not limited to the embodiments of the present disclosure. Hereinafter, the one or more processors 140 will be referred to as the processor 140 for convenience of explanation.

According to an embodiment, the processor 140 may receive, via the communication interface 120, a request from the external electronic device 200, which is remotely connected through the communication interface 120, for connection information of the camera 110 used to capture an image related to a video call application, in response to the execution of the video call application in the external electronic device 200. The processor 140 may obtain the connection information of the camera in response to the request and provide the information to the external electronic device.

Specifically, the processor 140 may perform remote access to the external electronic device 200 via the communication interface 120. Here, the external electronic device 200 is a device that the electronic device 100 intends to perform remote access to (more specifically, a device that the electronic device 100 remotely accesses to perform control over the external electronic device 200), and may be implemented as a TV, a desktop PC, a laptop, a smartphone, a tablet PC, a server device, etc. Meanwhile, the external electronic device 200 may be referred to as a source device, a client device, etc.

The external electronic device 200 may be a device in which information related to remote access is previously stored (or registered) in the memory (not shown) of the electronic device 100. For example, the electronic device 100 may obtain network access information of the external electronic device 200 (e.g., IP address information of the external electronic device 200, etc.) or identification information of the external electronic device 200 (e.g., MAC address information of the external electronic device 200, etc.) in advance and store them in the memory. Subsequently, when a remote access program (or application) installed in the electronic device 100 is executed, the processor 140 may perform remote access to the external electronic device 200 based on the previously stored network access information of the external electronic device 200 or identification information of the external electronic device 200.

In this case, in order to remotely access the external electronic device 200, an authentication process regarding the electronic device 100 may be performed. For example, the processor 140 may transmit an ID and a password to the external electronic device 200 through the communication interface 120. At this time, the external electronic device 200 may compare the ID and password previously registered with respect to remote access with the received ID and password to perform an authentication process for remote access of the electronic device 100. In this case, if it is identified that the previously registered ID and password and the received ID and password match, the external electronic device 200 may permit remote access to the electronic device 100. Accordingly, the processor 140 may obtain control authority for the external electronic device 200 and at this time, the control authority for the external electronic device 200 obtained by the processor 140 may be shared with the processor 140 of the external electronic device 200.

In addition, the processor 140 may obtain screen information of the external electronic device 200 from the external electronic device 200 and then display the screen of the external electronic device 200 on the display 130 based on the obtained screen information of the external electronic device 200. In other words, the processor 140 may display the same screen as the screen output from the external electronic device 200 on the display 130.

Meanwhile, the processor 140 may transmit various control information about the external electronic device 200 to the external electronic device 200 through the communication interface 120 based on the obtained control authority for the external electronic device 200. For example, when a control command for executing a specific program on the screen of the external electronic device 200 displayed on the display 130 is input through the input interface of the electronic device 100, the processor 140 may transmit control information corresponding to the input control command to the external electronic device 200 through the communication interface 120. Then, the external electronic device 200 may execute a specific program installed in the external electronic device 200 based on the received control information.

For example, the external electronic device 200 may execute a video call application among a plurality of programs installed in the external electronic device 200 based on control information received from the electronic device 100. Subsequently, when the video call application is executed, the external electronic device 200 may request the electronic device 100 to obtain connection information of the camera 110 of the electronic device 100. The processor 140 may obtain connection information of the camera 110 of the electronic device 100 according to the request received from the external electronic device 200.

Here, the video call application may be a program in which a plurality of electronic devices 100 are connected to each other via a network and share a captured image of the user of each of the electronic devices 100 through the camera 110.

Meanwhile, the present disclosure is not limited to a video call application, and when a program for sharing a captured image between different users using the camera 110 is executed, the external electronic device 200 may request the electronic device 100 to obtain connection information of the camera 110 included in the electronic device 100 and transmit the connection information to the external electronic device 200.

Meanwhile, the processor 140 may obtain connection information of the camera 110 for capturing an image related to a video call application. Here, the connection information of the camera 110 may include network address information of the electronic device 100 and network port number information for accessing the stream of the camera 110. For example, the connection information of the camera 110 may be URL information that allows remote viewing of a video stream obtained by the camera 110. In this case, the URL information may include the IP address and network port number information of the electronic device 100 based on a preset protocol.

Meanwhile, upon receiving a request to obtain (or generate) connection information of the camera 110 from an external electronic device 200, the processor 140 may activate (or wake up) the camera 110 and obtain (or generate) connection information for the camera 110.

After obtaining the connection information of the camera 110, the processor 140 transmits the obtained connection information of the camera 110 to the external electronic device 200 through the communication interface 120. In this case, the external electronic device 200 may change the setting information of the camera 110 of the video call application that is executed in the external electronic device 200 based on the received connection information of the camera 110. More specifically, the external electronic device 200 may change the camera 110 used to execute the video call application to the camera 110 of the electronic device 100 based on the received connection information of the camera 110.

Meanwhile, when the processor 140 is connected to a server device that provides a video call service of a video call application based on the connection information of the camera 110, the processor may transmit the captured image obtained by the camera 110 to the server device through the communication interface 120.

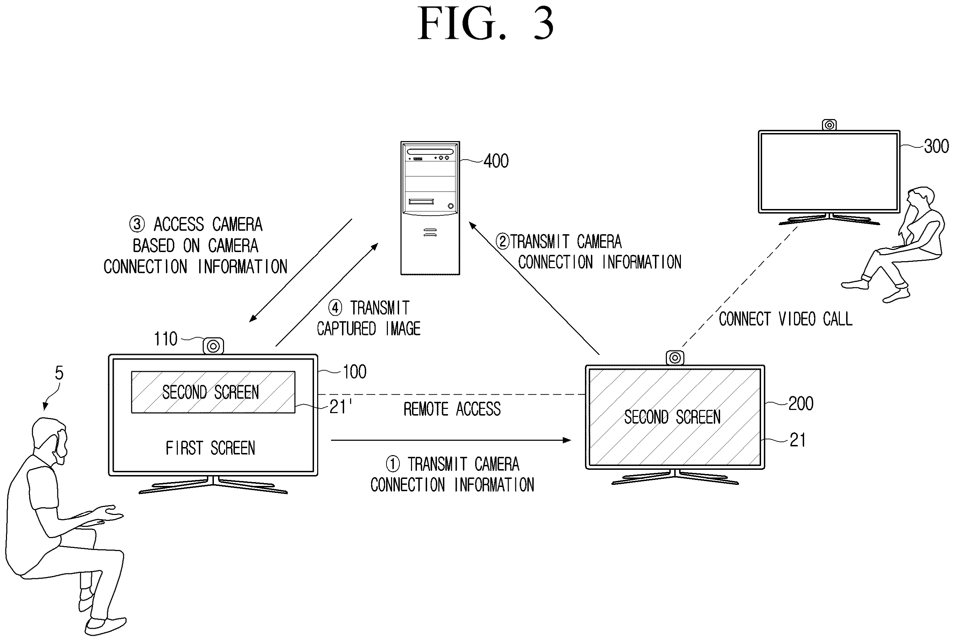

FIG. 3 is an exemplary view illustrating that the electronic device 100 transmits captured image information obtained through the camera 110 to a server device 400 providing a video call service according to an embodiment.

Specifically, referring to FIG. 3, the external electronic device 200 may transmit the connection information of the camera 110 received from the electronic device 100 to the server device 400 that provides the video call service of the video call application. In this case, the server device 400 may access the camera 110 of the electronic device 100 based on the connection information of the camera 110 received from the external electronic device 200. For example, the server device 400 may be connected to the electronic device 100 through a network based on the IP address information of the electronic device 100 included in the connection information of the camera 110, and may access the camera 110 of the electronic device 100 based on the port number information of the network included in the connection information of the camera 110. Accordingly, the server device 400 may obtain the captured image information obtained by the camera 110 from the electronic device 100 in real time.

Specifically, when it is identified that the server device 400 has accessed the camera 110 of the electronic device 100 based on the connection information of the camera 110, the processor 140 may transmit the captured image of the user 5 obtained through the camera 110 to the server device 400 through the communication interface 120.

Accordingly, even though the user 5 is in a space separated from the external electronic device 200 (i.e., the space where the electronic device 100 is located), the user 5 may perform a video call with another user 5 (hereinafter, referred to as a counterpart 6 of the video call) by using the video call application installed in the external electronic device 200 based on the captured image of the user 5 obtained through the camera 110 of the electronic device 100.

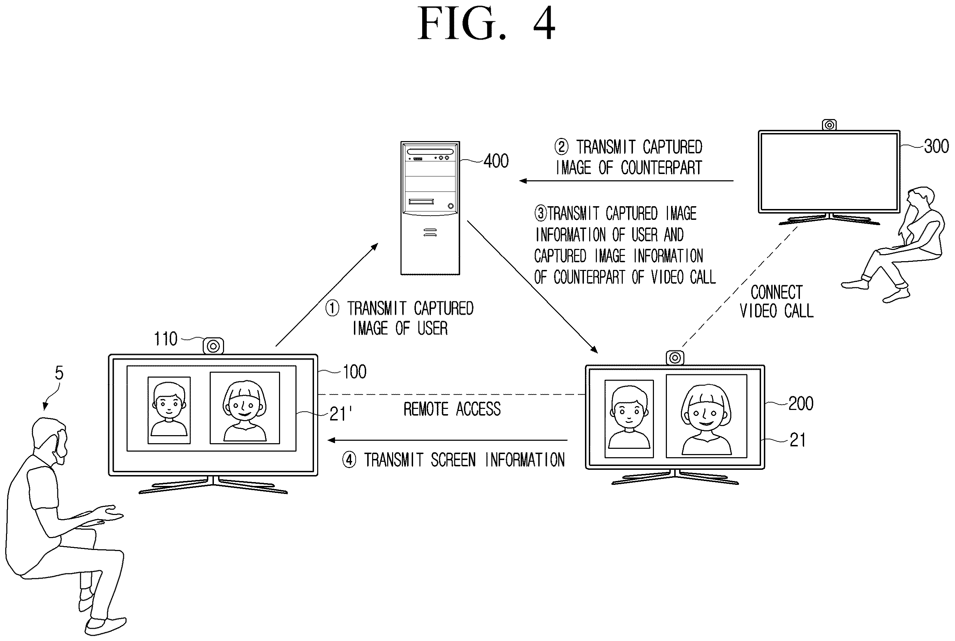

FIG. 4 is an exemplary view illustrating that the electronic device 100 receives execution screen information of a video call application from the external electronic device 200 according to an embodiment.

According to an embodiment, the processor 140 may receive a screen of the external electronic device 200 from the external electronic device 200 by remotely accessing the external electronic device 200 and display the screen through the display 130. In this case, the received screen of the first external electronic device 200 may include a video call image obtained through a video call application installed in the first external electronic device 200.

Specifically, as the video call application installed in the external electronic device 200 is executed, the processor 140 may receive screen information of the external electronic device 200 in which the video call application is executed from the external electronic device 200 through the communication interface 120. Then, the processor 140 may display a screen 21' that is identical to a screen 21 of the external electronic device 200 in which the video call application is executed, on the display 130, based on the received screen information.

In this case, the screen of the external electronic device 200 in which the video call application is executed, displayed on the display 130, may display the captured image of the user 5 along with the captured image of the counterpart 6 of the video call. Here, the counterpart 6 of the video call may be a user of another external electronic device 200 connected to the external electronic device 200 as the video call application is executed.

Hereinafter, for the convenience of explanation of the present disclosure, the external electronic device 200 to which an electronic device 100 is remotely connected will be referred to as a first external electronic device 200, and another external electronic device that is connected to the external electronic device 200 via a network by a video call application will be referred to as a second external electronic device 300.

Referring to FIG. 4, as described above, the server device 400 providing the video call service may directly receive the captured image information of the user 5 obtained through the camera 110 from the electronic device 100. In addition, the server device 400 may receive the captured image information of the counterpart 6 of the video call (specifically, the captured image information of the counterpart 6 of the video call obtained through the camera 110 of the second external electronic device 300) from the second external electronic device 300.

Meanwhile, in FIG. 4, it is illustrated that the user 5 executes a video call with a single counterpart, i.e., the counterpart 6, but the number of the counterparts 6 of the video call may be changed in various ways. In other words, the user 5 may conduct a video call with multiple other users 5 through the video call application. However, for the convenience of explanation of the present disclosure, it is assumed below that the user 5 makes a video call with one other user 6.

The server device 400 may transmit the received captured image information of the user 5 and the captured image information of the counterpart 6 of the video call to the first external electronic device 200. In this case, the first external electronic device 200 may output a screen including the captured image of the user 5 and the captured image of the counterpart 6 of the video call on an execution screen 21 of the video call application based on the received captured image information. In addition, the first external electronic device 200 may transmit screen information corresponding to the output screen to the electronic device 100.

The processor 140 may display a screen 21' that is identical to the screen 21 output from the remotely connected first external electronic device 200 (i.e., the execution screen of the video call application including the captured image of the user 5 and the captured image of the counterpart 6 of the video call) on the display 130 based on the screen information received from the first external electronic device 200.

In other words, the processor 140 directly obtains the captured image of the user 5 required for the video call application using the camera 110 and then directly transmits the captured image to the server device 400, while information about the execution screen of the video call application is received from the first external electronic device 200, not the server device 400.

The first external electronic device 200 relays information about the execution screen of the video call application received from the server device 400 and transmits the information to the electronic device 100. As a result, unlike the first external electronic device 200 that directly receives information about the execution screen of the video call application from the server device 400, the execution screen of the video call application may not be displayed smoothly on the electronic device 100. For example, when the network connection between the electronic device 100 and the first external electronic device 200 is unstable or the data size of the information about the execution screen of the video call application is very large, a problem that the image on the execution screen 21' of the video call application displayed on the electronic device 100 is cut off or the image quality is degraded may occur.

Accordingly, the processor 140 according to an embodiment identifies whether the image on the execution screen of the video call application displayed on the display 130 is cut off or the image quality is degraded, and when it is identified that the image on the execution screen of the video call application is cut off or the image quality is degraded, the processor 140 may directly receive information about the execution screen of the video call application from the server device 400. To this end, the processor 140 may change the network connection state with the server device 400, which had previously received information about the execution screen of the video call application through the first external electronic device 200, so that the electronic device 100 directly receives the information from the server device 400. Hereinafter, an embodiment of the present disclosure related thereto will be described in detail.

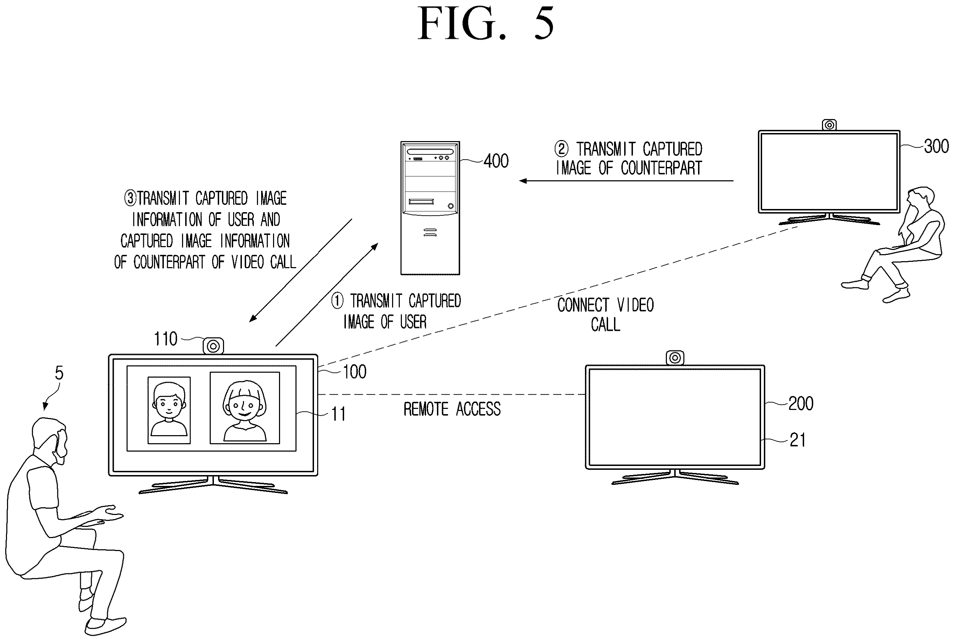

FIG. 5 is an exemplary view illustrating that a connection state between the electronic device 100 and the server device 400 related to a video call is changed, and a captured image of the counterpart 6 of the video call is directly received from the server device 400.

According to an embodiment, the processor 140 may compare the network connection speed between the electronic device 100 and the server device 400 and the network connection speed between the electronic device 100 and the server device 400 via the first external electronic device 200. Then, when the second network connection speed is less than the first network connection speed, the processor 140 may execute a video call application installed in the electronic device 100 to receive a video call image from the server device 400 that provides a video call service.

Specifically, the processor 140 may identify the network speed in each connection state, and compare the identified network speeds. Here, each connection state may be a network connection between the electronic device 100 and the server device 400 and a network connection between the electronic device 100 and the server device 400 via the first external electronic device 200 (or relayed by the first external electronic device 200.

Hereinafter, for the convenience of explanation of the present disclosure, a network connection through which the electronic device 100 and the server device 400 are directly connected will be referred to as a first network connection, and a network connection between the electronic device 100 and the server device 400 via the first external electronic device 200 (or relayed by the first external electronic device 200) will be referred to as a second network connection.

The processor 140 may identify the network speed in each connection state based on a ping time for each connection state (the first network connection and the second network connection). For example, the processor 140 may identify the network speed for the first network connection by transmitting a data packet to the server device 400 through the communication interface 120 using a ping, and then measuring the time at which a response corresponding to the data packet is received from the server device 400.

In addition, the processor 140 may identify the network speed for the second network connection by transmitting a data packet to the first external electronic device 200 through the communication interface 120 using a ping command, and then measuring the time at which a response corresponding to the data packet is received from the server device 400. In this case, the processor 140 may periodically identify the network speed for each connection state (the first network connection and the second network connection).

Meanwhile, when it is identified that the second network connection speed is less than the first network connection speed, the processor 140 may identify that the image on the execution screen of the video call application displayed on the display 130 is cut off or the image quality is degraded (or is likely to be degraded).

However, the present disclosure is not limited thereto, and when it is identified that the second network connection speed is less than the first network speed by a preset value (or ratio), the processor 140 may identify that the image on the execution screen of the video call application displayed on the display 130 is cut off or the image quality is degraded (or is likely to be degraded). Here, the preset value (or ratio) may be set based on the resolution, frame rate, etc. of the camera 110.

Meanwhile, when it is identified that the image on the execution screen of the video call application displayed on the display 130 is cut off or the image quality is degraded (or is likely to be degraded), the processor 140 may change the connection state between the electronic device 100 and the server device 400 from the first network connection to the second network connection.

Specifically, referring to FIG. 5, when it is identified that the second network speed is less than the first network speed, the processor 140 may execute a video call application installed in the electronic device 100. Subsequently, the processor 140 may execute a video call with the counterpart 6 of the second external electronic device 300 through the executed video call application. In other words, the second external electronic device 300 that was connected to the first external electronic device 200 in a video call may disconnect the video call connection with the first external electronic device 200 and reconnect to the video call with the electronic device 100.

In this case, the processor 140 may not only directly transmit the captured image of the user 5 obtained through the camera 110 to the server device 400 (i.e., the server device 400 providing the video call service) through the communication interface 120, but also directly receive the captured image of the counterpart 6 of the second external electronic device 300 from the server device 400.

At this time, an execution screen 11 of the video call displayed on the display 130 may be may be the result of the video call application of the electronic device 100 being executed, rather than being due to remote access. As a result, the phenomenon of screen freezing (or delay) in the video call execution screen displayed on the display 130 via remote access may be resolved, and the user(5 may be able to conduct a smoother and more seamless video call with the counterpart 6 (the second external electronic device (300)).

Meanwhile, according to an embodiment, the processor 140 may receive information about a network connection speed between the first external electronic device 200 and the server device 400 from the first external electronic device 200. Then, the processor 140 may identify a network speed for the second network connection based on the network connection speed between the electronic device 100 and the first external electronic device 200 and the received network connection speed between the first external electronic device 200 and the server device 400.

Specifically, the processor 140 may identify the speed of the network connection between the electronic device 100 and the first external electronic device 200 using a ping command. However, since the second network connection is a network connection between the electronic device 100 and the server device 400 via the first external electronic device 200, in order for the processor 140 to accurately identify the speed of the second network connection, it is also necessary to identify the speed of the network connection between the first external electronic device 200 and the server device 400. Accordingly, the processor 140 may request the first external electronic device 200 to transmit speed information about the network connection between the first external electronic device 200 and the server device 400 through the communication interface 120.

For example, the processor 140 may request the first external electronic device 200 to transmit information about the speed of the network connection between the first external electronic device 200 and the server device 400 identified using a ping command to the electronic device 100. At this time, the processor 140 may request the first external electronic device 200 to transmit information about the speed of the network connection between the first external electronic device 200 and the server device 400 to the electronic device 100 by transmitting a query command (or data packet) to the first external electronic device 200.

Hereinafter, for the convenience of explanation of the present disclosure, a network connection in which the electronic device 100 and the first external electronic device 200 are directly connected will be referred to as a 2-1 network connection, and a network connection between the first external electronic device 200 and the server device 400 will be referred to as a 2-2 network connection.

Meanwhile, upon receiving network speed information for the 2-2 network connection from the first external electronic device 200, the processor 140 may compare the network speed for the first network connection with the 2-1 network and 2-2 network speeds, respectively. Subsequently, when it is identified that at least one of the 2-1 network speed or the 2-2 network speed is less than the first network speed (or less than a preset value (or ratio)), the processor 140 may identify that the image on the execution screen of the video call application displayed on the display 130 is cut off or the picture quality is degraded (or is likely to be degraded), and change the connection state between the electronic device 100 and the server device 400 from the first network connection to the second network connection.

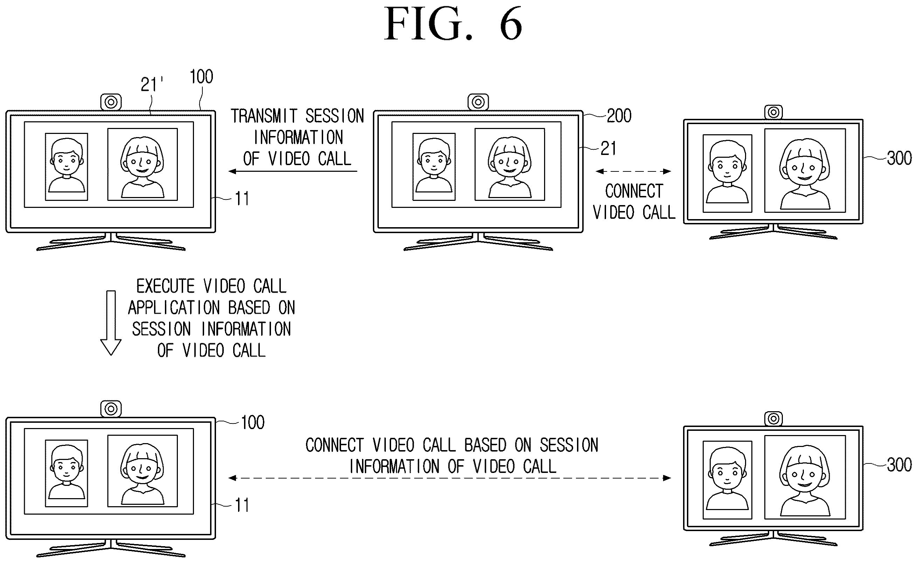

FIG. 6 is a view illustrating that the electronic device 100 displays a video call execution screen based on session information according to an embodiment.

According to an embodiment, when the second network connection speed is less than the first network connection speed, the processor 140 may receive session information of a video call between the first external electronic device 200 and the second external electronic device 300 from the first external electronic device 200 through the communication interface 120.

Specifically, when it is identified that the image on the execution screen of the video call application displayed on the display 130 is cut off or the image quality is degraded (or is likely to be degraded), the processor 140 may request the first external electronic device 200 to transmit video call session information between the first external electronic device 200 and the second external electronic device 300 to the electronic device 100 through the communication interface 120.

Here, the session information refers to information required to conduct a video call between the user 5 and the counterpart 6 (the counterpart 6 of the second external electronic device 300), and may include setting information such as codec, resolution, and frame rate used in the video call, screen splitting method, participant information of the video call, and connection state information of the video call.

Upon receiving session information of a video call between the first external electronic device 200 and the second external electronic device 300 from the first external electronic device 200, the processor 140 may execute a video call application installed in the electronic device 100 based on the received session information.

Specifically, when session information of a video call is received, the processor 140 may execute a video call installed in the electronic device 100, and execute a video call between the electronic device 100 and the second external electronic device 300 based on the received session information of the video call. For example, referring to FIG. 6, the processor 140 may perform a video call connection between the electronic device 100 and the second external electronic device 300 based on information of the counterpart 6 of the video call included in the received session information (e.g., IP information of the second external electronic device 300, identification information of the second external electronic device 300, etc.).

Accordingly, the video call execution screen may display the captured image of the counterpart 6 who conducted the existing video call in the same manner. In addition, the processor 140 may generate a video call UI in the same form as the video call UI generated by the first external electronic device 200 based on the resolution information, screen splitting method information, etc. included in the received session information, and display the video call UI on the display 130.

As such, even though the connection state related to the video call has changed, the processor 140 may execute the video call with the second external electronic device 300 that was previously conducted through the first external electronic device 200 can be executed in the same manner in the electronic device 100 based on the session information. Accordingly, the user 5 may conveniently continue the video call with the counterpart 6 without having to execute a separate video call application or change the setting information related to the video call.

Further, upon receiving session information from the first external electronic device 200, the processor 140 may transmit a termination request for a video call application that is being executed in the first external electronic device 200 to the first external electronic device 200 through the communication interface 120.

Specifically, upon receiving session information from the first external electronic device 200, the processor 140 may request the first external electronic device 200 to terminate the ongoing video call with the counterpart 6 or terminate the video call application that is being executed through the communication interface 120 so that the video call with the counterpart 6 is not redundantly conducted. Meanwhile, when the video call application that is being executed is terminated according to the request of the processor 140 described above, the processor 140 may transmit information indicating that the video call application has been terminated to the electronic device 100. Then, when it is identified that the video call application in the first external electronic device 200 has been terminated (the video call with the counterpart 6 has been terminated), the processor 140 may execute the video call application installed in the electronic device 100 and proceed with the video call with the counterpart 6 with whom the previous video call was conducted based on the received session information.

Meanwhile, when it is identified that a video call application is not installed in the electronic device 100, the processor 140 may display a UI guiding installation of a video call application through the display 130.

Specifically, when it is identified that the image on the execution screen of the video call application displayed on the display 130 is cut off or the image quality is degraded (or is likely to be degraded), the processor 140 may identify whether a video call application is installed in the electronic device 100 before changing the network connection state related to the video call.

To this end, the processor 140 may request the first external electronic device 200 to transmit information about the video call application (e.g., URL information about the video call application, digital signature information about the application, license information about the application, etc.) to the electronic device 100. Subsequently, the processor 140 may identify whether the video call application is installed in the electronic device 100 based on the received information about the video call application. At this time, when it is identified that the video call application is not installed in the electronic device 100, the processor 140 may display a UI guiding installation of the video call application on the display 130 before requesting session information about the video call. In particular, the processor 140 may induce the user 5 to more easily install the video call application in the electronic device 100 by displaying URL information about the video call application together.

When a video call application installed in the electronic device 100 is executed, the processor 140 may display a screen in which the execution screen of the video call application is included in one area and a remote access screen for the first external electronic device 200 is included in the remaining area through the display 130.

Specifically, when the video call application installed in the electronic device 100 is executed, the processor 140 may display the execution screen of the video call application on the first area of the display 130. In addition, the processor 140 may display a remote access screen for the first external electronic device 200 on the second area of the display 130. In other words, the processor 140 may display the same screen as the screen output from the first external electronic device 200 based on screen information received from the first external electronic device 200 on the second area. Through this, the user 5 may utilize data or installed programs stored in the first external electronic device 200 through remote access, while at the same time continuing the video call with the user 5 who wanted to proceed with the video call through the first external electronic device 200, through the electronic device 100.

Meanwhile, the processor 140 may change the connection state between the electronic device 100 and the server device 400 related to the video call based on whether the video call image displayed on the first external electronic device 200 is encoded and the encoding method based on the screen information received from the first external electronic device 200. Hereinafter, an embodiment of the present disclosure related thereto will be described in detail.

According to an embodiment, when it is identified that the first external electronic device 200 is unable to encode and transmit a video call image, the processor 140 may execute a video call application installed in the electronic device 100 to receive a video call image from the server device 400 that provides a video call service.

In particular, in order to identify whether a video call image can be encoded and transmitted, the processor 140 may identify whether a hardware encoder module is included in the first external electronic device 200. When it is identified that the first external electronic device 200 does not include a hardware encoder module, the processor 140 may identify that the image on the execution screen of the video call application displayed on the display 130 is cut off or the image quality is degraded (or is likely to be degraded). Accordingly, when it is identified that the first external electronic device 200 includes a hardware encoder module, the processor 140 may maintain the connection state between the electronic device 100 and the server device 400 related to the video call as the existing first network connection. In other words, the processor 140 may maintain the connection state between the electronic device 100 and the server device 400 relayed by the first external electronic device 200 as it is.

On the other hand, when it is identified that the first external electronic device 200 does not include a hardware encoder module, the processor 140 may change the connection state between the electronic device 100 and the server device 400 related to the video call from the existing first network connection to the second network connection. The connection state change to the second network connection has been described above, so a detailed description thereof will be omitted.

Hardware encoder modules may include GPU-based NVENC, VCE, Quick Sync Video, etc., and FPGA-based Video and Image Processing Suite, etc.

Meanwhile, in order to identify whether the first external electronic device 200 includes a hardware encoder module, the processor 140 may request the first external electronic device 200 to transmit information indicating whether the hardware encoder module is included. Alternatively, the processor 140 may identify whether the hardware encoder module is included in the first external electronic device 200 based on an external electronic device 200-hardware encoder module table stored in the memory 150 of the electronic device 100. Here, the external electronic device 200-hardware encoder module table may be a table in which information indicating whether each of the plurality of external electronic devices 200, which have been remotely controlled by the electronic device 100, includes a hardware encoder module, and information about the type of hardware encoder module included in each external electronic device 200 are matched and stored.

In addition, according to an embodiment, when it is identified that the first external electronic device 200 does not transmit screen information based on a media codec, the processor 140 may execute a video call application installed in the electronic device 100 to receive a video call image from the server device 400 that provides a video call service. Specifically, the processor 140 may identify that the first external electronic device 200 is unable to encode and transmit a video call image (or does not transmit screen information based on a media codec) based on the type of protocol for remote control for the first external electronic device 200.

Specifically, when it is identified that the type of protocol for remote control for the first external electronic device 200 is a preset type of protocol, the processor 140 may identify that the first external electronic device 200 is unable to encode and transmit a video call image (or that the first external electronic device 200 does not transmit screen information based on a media codec). Here, the type of the preset protocol may be (Remote Desktop Protocol (RDP).

In this case, when it is identified that the protocol related to remote control is RDP, the processor 140 may identify that the video on the execution screen of the video call application displayed on the display 130 is cut off or the image quality is degraded (or is likely to be degraded). Accordingly, when it is identified that the protocol related to remote control is RDP, the processor 140 may change the connection state between the electronic device 100 and the server device 400 related to the video call from the existing first network connection to the second network connection. On the other hand, when it is identified that the protocol related to remote control is not RDP, the processor 140 may maintain the connection state between the electronic device 100 and the server device 400 relayed by the first external electronic device 200 as it is.

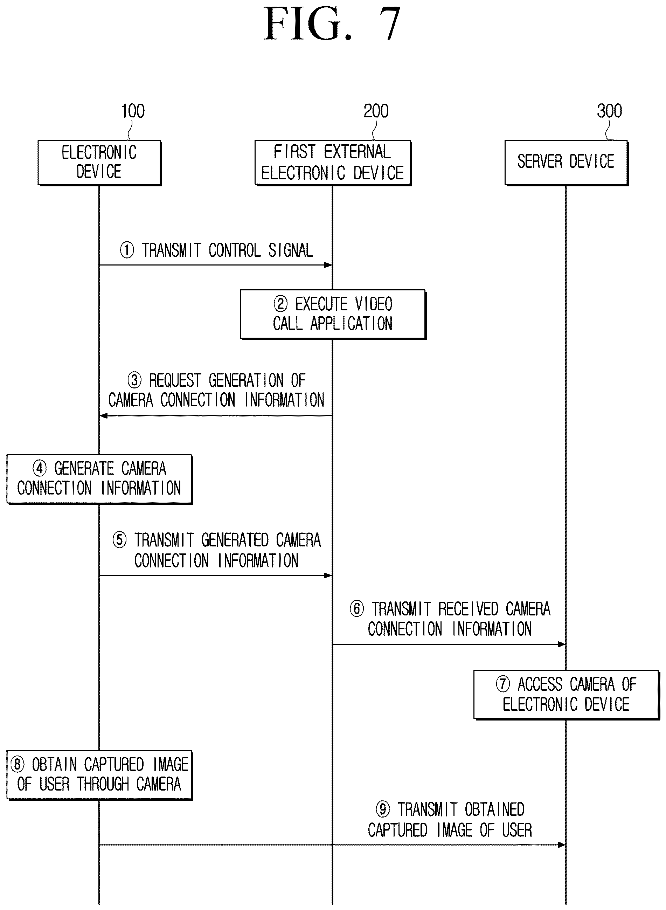

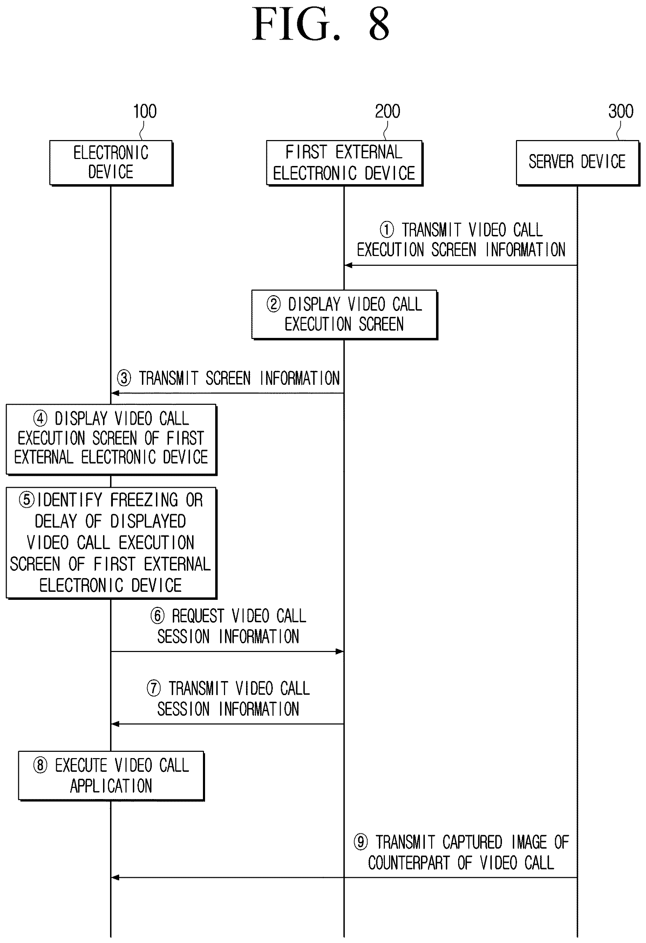

FIG. 7 is a sequence view illustrating a method of generating connection information of a camera of an electronic device according to an embodiment. FIG. 8 is a sequence view illustrating a method of changing a connection state between an electronic device and a server device related to a video call according to an embodiment.

Referring to FIG. 7, when a user's control command for the first external electronic device 200 is input through an input interface (not shown) of the electronic device 100 while the electronic device 100 is remotely connected to the first external electronic device 200, the electronic device 100 transmits a control signal corresponding to the input control command to the first external electronic device 200 through the communication interface 120 (①).

In this case, when the video call application installed in the first external electronic device 200 is executed based on the received control signal, the first external electronic device 200 requests the electronic device 100 to generate connection information of the camera 110 (③). Here, since the connection information of the camera 110 has been described above, a detailed description thereof will be omitted.

Accordingly, the electronic device 100 generates the connection information of the camera 110 of the electronic device 100 (④) and then transmits the connection information to the first external electronic device 200 through the communication interface 120 (⑤). In this case, the connection information of the camera 110 transmitted to the first external electronic device 200 is transmitted to the server device 400 by the first external electronic device 200 (⑥).

Meanwhile, when the server device 400 receives the connection information of the camera 110 from the first external electronic device 200, the server device 400 can be connected to the electronic device 100 via a network based on the received connection information of the camera 110, and can also access the camera 110 of the electronic device 100 (⑦).

In this case, the electronic device 100 obtains a captured image of the user through the camera 110 (⑧) and then transmits information about the obtained captured image of the user to the server device 400 (⑨). In other words, the server device 400 obtains information about the captured image of the user from the electronic device 100 that performed the remote access, not from the first external electronic device 200 that executed the video application. Meanwhile, through this, the server device 400 may obtain the captured image of the user streamed in real time by the camera 110 of the electronic device 100.

Meanwhile, referring to FIG. 8, when the video call application installed in the first external electronic device 200 is executed while the electronic device 100 is remotely connected to the first external electronic device 200, the server device 400 receives video call execution screen information including information about the captured image information of the counterpart of the video call (more specifically, the user of the second external electronic device 200 connected via a network for the video call with the first external electronic device 200) from the second external electronic device 200 and then transmits the information to the first external electronic device 200 (①).

The first external electronic device 200 outputs a video call execution screen based on the received information about the captured image of the counterpart of the video call (②). For example, the first external electronic device 200 may output a video call execution screen including the captured image of the counterpart through a display included in the first external electronic device 200. Meanwhile, although not shown in FIG. 8, the server device 400 may also include the information about the captured image of the user obtained from the electronic device 100 in the video call execution screen information.

Meanwhile, the first external electronic device 200 transmits screen information of the first external electronic device 200 to the electronic device 100 that is remotely connected to the first external electronic device 200 (③). Here, the screen information of the first external electronic device 200 may also include information about a video call execution screen that is output from the first external electronic device 200.

The electronic device 100 may display on the display the same screen as the screen output from the first external electronic device 200 based on the received screen information of the first external electronic device 200 (④). In addition, the electronic device 100 may identify whether a phenomenon in which the video cut off or delayed occurs on the video call execution screen among the screens output from the first external electronic device 200 (⑤). Here, the image on the video call execution screen may include not only the captured image of the video call counterpart, but also the captured image of the user that the electronic device 100 has transmitted to the server device 400.

When it is identified that phenomenon in which the video is cut off or delayed occurs on the video call execution screen, the electronic device 100 may transmit a signal requesting to transmit session information of the video call to the first external electronic device 200 through the communication interface 120 (⑥). Here, since the description of the present disclosure described above is equally applied to the session information of the video call, a detailed description thereof will be omitted.

Meanwhile, the electronic device 100 may execute a video call application installed in the electronic device 100 after receiving the session information of the video call (⑦). In addition, the electronic device 100 may receive video call execution screen information including a captured image of the video call counterpart directly from the server device 400 (⑨).

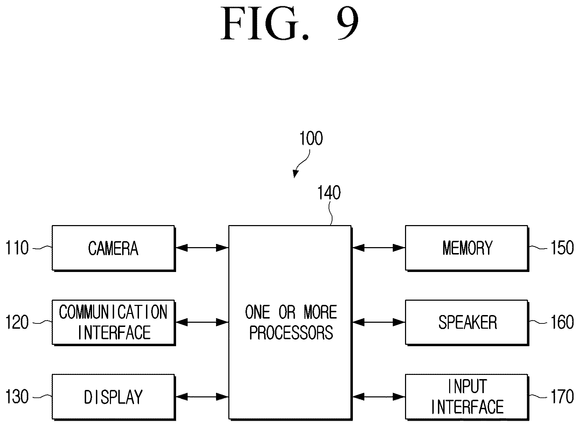

FIG. 9 is a detailed configuration view of the electronic device 100 according to an embodiment.

Referring to FIG. 9, the electronic device 100 according to an embodiment may include the camera 110, the communication interface 120, the display 130, a memory 150, a speaker 160, an input interface 170, and one or more processors 140. Hereinafter, any part that overlaps with the above description will be omitted or abbreviated.

The memory 150 may store an O/S (Operating System) for driving the electronic device 100. In addition, the memory 150 may store a software program or an application for operating the electronic device 100 according to various embodiments. In addition, the memory 150 may store various information, such as data that is input, set, or generated during the execution of a program or an application.

Meanwhile, according to an embodiment, the memory 150 may store network connection information of the external electronic device 200 (e.g., IP address information of the external electronic device 200, etc.) or identification information of the external electronic device 200 (e.g., MAC address information of the external electronic device 200, etc.). The processor 140 may perform remote access to the external electronic device 200 based on the network connection information of the external electronic device 200 or the identification information of the external electronic device 200 stored in the memory 150. In addition, according to an embodiment, a video call application may also be stored in the memory 150.

The speaker 160 may output various audio signals on which various processing operations such as decoding, amplification, or noise filtering have been performed by an audio processing unit (not shown). Meanwhile, the processor 140 may output audio signals output by the first external electronic device 200 through the speaker 160 based on audio information of the first external electronic device 200 included in the screen information received from the first external electronic device 200.

The input interface 170 may be implemented as a touch screen, a touch pad, a key button, a key pad, etc. Alternatively, the input interface 170 may be implemented as a remote control device, such as a remote controller, a pad, etc. The processor 140 may control the electronic device 100 based on a control command of the user 5 input through the input interface 170. In addition, when the user 5 inputs a control command for the external electronic device 200 that is remotely connected through the input interface 170, the processor 140 may transmit a control signal corresponding to the input control command to the external electronic device 200 through the communication interface 120.

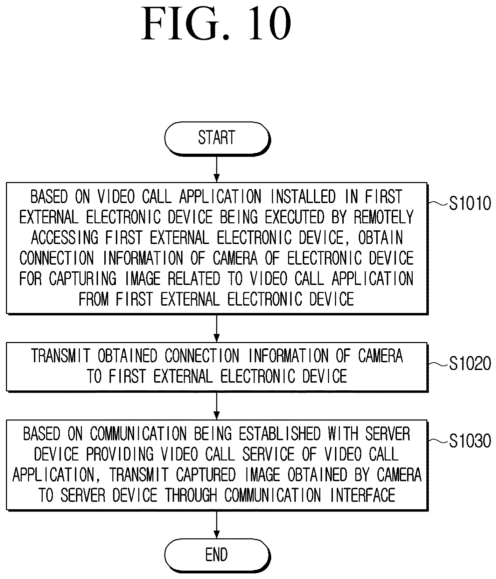

FIG. 10 is a flowchart illustrating a method of controlling the electronic device 100 according to an embodiment.

Referring to FIG. 10, when an electronic device 100 remotely accesses the first external electronic device 200 and a video call application installed in the first external electronic device 200 is executed, the electronic device 100 obtains connection information of the camera 110 of the electronic device 100 for capturing an image related to the video call application from the first external electronic device 200 (S1010).

Specifically, the electronic device 100 may transmit control information corresponding to a control command of the user 5 for executing a video call application installed in the first external electronic device 200 to the first external electronic device 200 through the communication interface 120. In this case, when the video call application among a plurality of programs installed in the external electronic device 200 is executed based on the control information received from the electronic device 100, the first external electronic device 200 may request the electronic device 100 to obtain connection information of the camera 110 of the electronic device 100.

The connection information of the camera 110 may include network address information of the electronic device 100 and network port number information for accessing the stream of the camera 110.

Subsequently, the electronic device 100 transmits the obtained connection information of the camera 110 to the first external electronic device 200 (S1020).

When the electronic device 100 is connected to the server device 400 that provides a video call service of a video call application based on the connection information of the camera 110, the electronic device 100 transmits the captured image obtained by the camera 110 to the server device 400 through the communication interface 120 (S1030).

Specifically, the first external electronic device 200 may transmit the received connection information of the camera 110 to the server device 400 that provides the video call service of the video call application. In this case, the server device 400 may access the camera 110 of the electronic device 100 based on the connection information of the camera 110 received from the external electronic device 200. As a result, the electronic device 100 may be communicatively connected to the server device 400. Subsequently, the electronic device 100 may transmit the captured image obtained by the camera 110 to the server device 400 that is communicatively connected, through the communication interface 120.

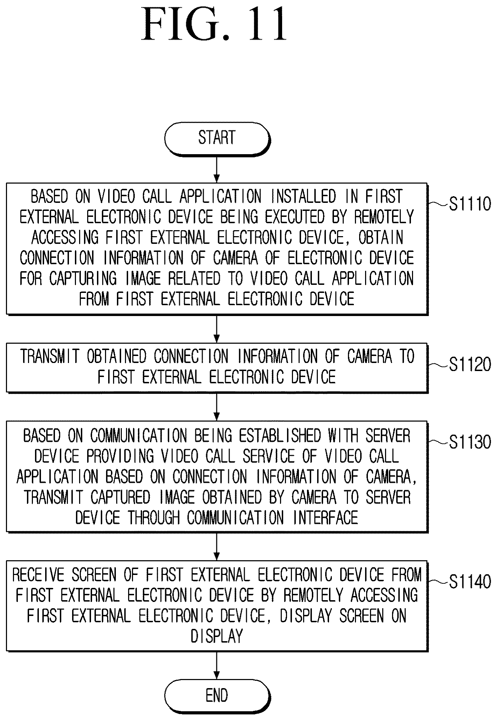

FIG. 11 is a flowchart illustrating a method of controlling the electronic device 100 according to an embodiment. Steps S1110 to S1130 illustrated in FIG. 11 correspond to steps S1010 to S1030 illustrated in FIG. 10, respectively, and thus a detailed description thereof will be omitted.

The electronic device 100 may transmit a captured image obtained by the camera 110 to the server device 400 through the communication interface 120 and then remotely access the first external electronic device 200, thereby receiving the screen of the first external electronic device 200 from the first external electronic device 200 and displaying the screen on the display 130 (S1140).

Specifically, the electronic device 100 may receive screen information of the screen output from the first external electronic device 200 from the first external electronic device 100. Here, the screen information may include audio information output from the first external electronic device 200. Meanwhile, the electronic device 100 may display the same screen as the screen output from the first external electronic device 200 on the display 130 based on the received screen information. In this case, the received screen of the first external electronic device 200 may include a video call image obtained through a video call application installed in the first external electronic device 200.

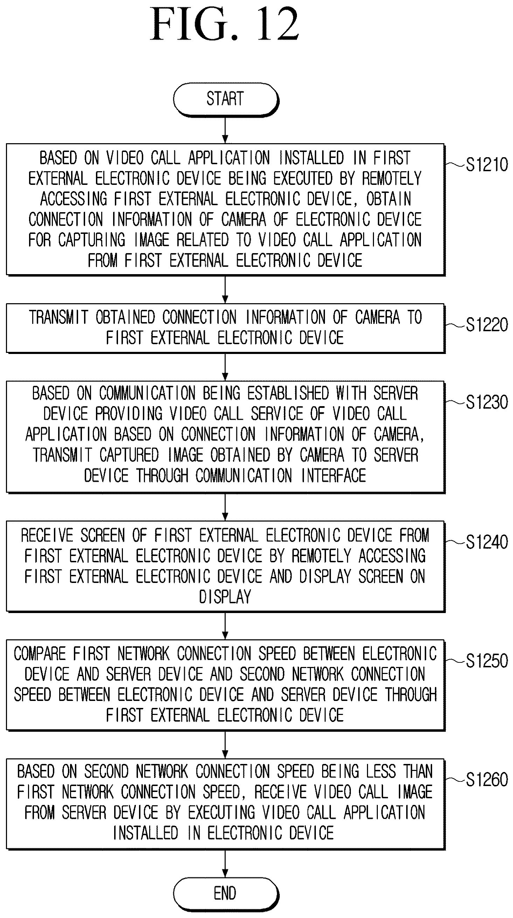

FIG. 12 is a flowchart illustrating a method of controlling the electronic device 100 according to an embodiment. Steps S1210 to S1230 illustrated in FIG. 12 correspond to steps S1010 to S1030 illustrated in FIG. 10, respectively, and step S1240 corresponds to step S1140 illustrated in FIG. 11, so a detailed description thereof will be omitted.

The electronic device 100 may compare a first network connection speed between the electronic device 100 and the server device 400 and a second network connection speed between the electronic device 100 and the server device 400 through the first external electronic device 200 (S1250).

In this case, when the electronic device 100 receives information about the network connection speed (i.e., the 2-2 network connection speed) between the first external electronic device 200 and the server device 400 from the first external electronic device 200, the electronic device 100 may identify the second network connection speed based on the network connection speed (i.e., the 2-1 network connection speed) between the electronic device 100 and the first external electronic device 200 and the 2-2 network connection speed.

When the second network connection speed is less than the first network connection speed, the electronic device 100 may receive a video call image from the server device 400 that provides a video call service by executing a video call application installed in the electronic device 100 (S1260).

In this case, when the second network connection speed is less than the first network connection speed, the electronic device 100 may receive session information of a video call between the first external electronic device 200 and the second external electronic device 300 from the first external electronic device 200 through the communication interface 120, and may receive a video call image from the server device 400 that provides a video call service by executing a video call application installed in the electronic device 100 based on the received session information.

When it is identified that a video call application is not installed in the electronic device 100, the electronic device 100 may display a UI guiding installation of the video call application through the display 130.

In addition, when the electronic device 100 receives session information from the first external electronic device 200, the electronic device 100 may transmit a termination request for the video call application that is being executed in the first external electronic device 200 to the first external electronic device 200 through the communication interface 120.

In addition, when a video call application installed in the electronic device 100 is executed, the electronic device 100 may display a screen in which the execution screen of the video call application is included in one area and a screen for remote access to the first external electronic device 200 is displayed in the remaining area through the display 130.

Meanwhile, when it is identified that the first external electronic device 200 is unable to encode and transmit a video call image, the electronic device 100 may receive the video call image from the server device 400 that provides a video call service by executing a video call application installed in the electronic device 100.

Meanwhile, in the above description, steps S1010 to S1030, steps S1110 to S1140, and steps S1210 to S1250 may be further divided into additional steps or combined into fewer steps, depending on the implementation of the present invention. In addition, some steps may be omitted as needed, and the order between the steps may be changed.

Meanwhile, the methods according to various embodiments of the present disclosure described above may be implemented in the form of an application that can be installed in an existing electronic device. Alternatively, the methods according to various embodiments of the present disclosure described above may be performed using a deep learning-based artificial neural network (or deep artificial neural network), that is, a trained network model.

In addition, the methods according to various embodiments of the present disclosure described above may also be implemented only by a software upgrade or a hardware upgrade of an existing electronic device.

In addition, the various embodiments of the present disclosure described above may also be performed through an embedded server provided in the electronic device, or an external server of the electronic device.

Meanwhile, according to an embodiment, the above-described various embodiments may be implemented as software including instructions stored in machine-readable storage media, which can be read by machine (e.g.: computer). The machine refers to a device that calls instructions stored in a storage medium, and can operate according to the called instructions, and the device may include a display device (e.g., electronic device A) according to the aforementioned embodiments. In case an instruction is executed by a processor, the processor may perform a function corresponding to the instruction by itself, or by using other components under its control. The instruction may include a code that is generated or executed by a compiler or an interpreter. The machine-readable storage medium may be provided in the form of a non-transitory storage medium. Here, the term 'non-transitory' means that the storage medium is tangible without including a signal, and does not distinguish whether data are semi-permanently or temporarily stored in the storage medium.

In addition, according to an embodiment, the above-described methods according to the various embodiments may be included and provided in a computer program product. The computer program product may be traded as a product between a seller and a purchaser. The computer program product may be distributed in a form of a storage medium (e.g., a compact disc read only memory (CD-ROM)) that may be read by the machine or online through an application store (e.g., PlayStore^{™}). In case of the online distribution, at least a portion of the computer program product may be at least temporarily stored in a storage medium such as a memory of a server of a manufacturer, a server of an application store, or a relay server or be temporarily generated.

The components (e.g., modules or programs) according to various embodiments described above may include a single entity or a plurality of entities, and some of the corresponding sub-components described above may be omitted or other sub-components may be further included in the various embodiments. Alternatively or additionally, some components (e.g., modules or programs) may be integrated into one entity and perform the same or similar functions performed by each corresponding component prior to integration. Operations performed by the modules, the programs, or the other components according to the various embodiments may be executed in a sequential manner, a parallel manner, an iterative manner, or a heuristic manner, or at least some of the operations may be performed in a different order or be omitted, or other operations may be added.

Although preferred embodiments of the present disclosure have been shown and described above, the disclosure is not limited to the specific embodiments described above, and various modifications may be made by one of ordinary skill in the art without departing from the gist of the disclosure as claimed in the claims, and such modifications are not to be understood in isolation from the technical ideas or prospect of the disclosure.

## Claims

1. An electronic device comprising:
a communication interface;
a camera;
a display; and
one or more processors configured to:
in response to a video call application being executed in a first external electronic device remotely connected through the communication interface, receive a request for providing connection information of the camera to capture an image related to the video call application from the first external electronic device;
transmit the connection information of the camera obtained in response to the request to the first external electronic device; and
based on communication being established with a server device providing a video call service of the video call application based on the connection information of the camera transmitted to the first external electronic device, transmit an image captured through the camera to the server device through the communication interface.

2. The device as claimed in claim 1, wherein the one or more processors are configured to:
receive a screen of the first external electronic device from the first external electronic device by remotely accessing the first external electronic device and display the screen through the display,
wherein the received screen of the first external electronic device includes a video call image obtained through the video call application installed in the first external electronic device.

3. The device as claimed in claim 2, wherein the one or more processors are configured to:
compare a first network connection speed between the electronic device and the server device and a second network connection speed between the electronic device and the server device through the first external electronic device; and
based on the second network connection speed being less than the first network connection speed, receive a video call image from a server device performing the video call service by executing a video call application installed in the electronic device.

4. The device as claimed in claim 3, wherein the one or more processors are configured to:
based on the second network connection speed being less than the first network connection speed, receive session information of a video call between the first external electronic device and the second external electronic device from the first external electronic device through the communication interface, and receive a video call image from a server device providing the video call service by executing a video call application installed in the electronic device based on the received session information.

5. The device as claimed in claim 4, wherein the one or more processors are configured to:
based on the session information being received from the first external electronic device, transmit a termination request for the video call application that is being executed in the first external electronic device to the first external electronic device through the communication interface.

6. The device as claimed in claim 3, wherein the one or more processors are configured to:
based on information about a third network connection speed between the first external electronic device and the server device being received from the first external electronic device, identify the second network connection speed based on a fourth network connection speed between the electronic device and the first external electronic device and the third network connection speed.

7. The device as claimed in claim 3, wherein the one or more processors are configured to:
based on the video call application installed in the electronic device being executed, display a screen in which an execution screen of the video call application is included in one area and a remote access screen for the first external electronic device is included in a remaining area through the display.

8. The device as claimed in claim 2, wherein the one or more processors are configured to:
based on identifying that the first external electronic device is unable to encode and transmit the video call image, receive a video call image from a server device providing the video call service by executing a video call application installed in the electronic device.

9. The device as claimed in claim 3, wherein the one or more processors are configured to:
based on identifying that the video call application is not installed in the electronic device, display a UI guiding installation of the video call application through the display.

10. A controlling method of an electronic device, comprising:
in response to a video call application being executed in a first external electronic device by remotely accessing the first external electronic device, receiving a request for providing connection information of a camera of the electronic device to capture an image related to the video call application from the first external electronic device;
transmitting the connection information of the camera obtained in response to the request to the first external electronic device; and
based on communication being established with a server device providing a video call service of the video call application based on the connection information of the camera transmitted to the first external electronic device, transmitting an image captured through the camera to a server device through the communication interface.

11. The method as claimed in claim 10, further comprising:
receiving a screen of the first external electronic device from the first external electronic device by remotely accessing the first external electronic device and displaying the screen through the display,
wherein the received screen of the first external electronic device includes a video call image obtained through the video call application installed in the first external electronic device.

12. The method as claimed in claim 11, further comprising:
comparing a first network connection speed between the electronic device and the server device and a second network connection speed between the electronic device and the server device through the first external electronic device; and
based on the second network connection speed being less than the first network connection speed, receiving a video call image from a server device performing the video call service by executing a video call application installed in the electronic device.

13. The method as claimed in claim 12, wherein the receiving comprises:
based on the second network connection speed being less than the first network connection speed, receiving session information of a video call between the first external electronic device and the second external electronic device from the first external electronic device through the communication interface; and
receiving a video call image from a server device providing the video call service by executing a video call application installed in the electronic device based on the received session information.

14. The method as claimed in claim 13, further comprising:
based on the session information being received from the first external electronic device, transmitting a termination request for the video call application that is being executed in the first external electronic device to the first external electronic device through the communication interface.

15. The method as claimed in claim 12, wherein the comparing comprises:
based on information about a third network connection speed between the first external electronic device and the server device being received from the first external electronic device, identifying the second network connection speed based on a fourth network connection speed between the electronic device and the first external electronic device and the third network connection speed.
